# EUROPEAN PATENT APPLICATION

(11) **EP 2 330 286 A1**
(43) Date of publication of application: **08.06.2011**
(21) Application number: 09813003.2
(22) Date of filing: 27.08.2009
(51) Int. Cl.: F02M 25/022, F02B 47/02, F02M 37/00

(54) **MIXER FOR FUEL FEEDING DEVICE**

(30) Priority: 12.09.2008 JP 2008235031
(71) Applicant: Ito Racing Service Co., Ltd,, Okazaki-shi, Aichi 444-3441 (JP)
(72) Inventor: ITO, Takeshiro, Okazaki-shi Aichi 444-3441 (JP)
(74) Representative: Vogel, Andreas
(86) International application number: PCT/JP2009/064977
(87) International publication number: WO 2010/029856

(57) **Abstract**

A mixer for a fuel feeding device comprises a swirl flow chamber having a doughnut-shaped space, an inflow hole connected to the swirl flow chamber from the outer peripheral side of the swirl flow chamber, a cylindrical section which is formed concentrically to the swirl flow chamber and which has a cylindrical space area, a tapered hole formed concentrically to the swirl flow chamber, diverged toward the swirl flow chamber, and connected to the swirl flow chamber and the cylindrical section, and an outflow hole which is formed concentrically to the swirl flow chamber and which communicates with the cylindrical section on the opposite side thereof to the side where the cylindrical section is connected to the tapered hole.

## Description

### TECHNICAL FIELD

The present invention relates to a mixer for a fuel feeding device, which is used with a fuel feeding device for feeding fuel to an internal combustion engine, and which mixes other fluid such as water and air into fuel.

### BACKGROUND ART

Conventionally, there is a well-known method for feeding mixed fuel, in which water and air are mixed into fuel, to an internal combustion engine for improving combustion efficiency.
In the device described in Patent Document 1, fuel, water and air are mixed by a mixer to produce oil-water emulsion fuel in which air is mixed, and the oil-water emulsion fuel is retained in a chamber. Then the oil-water emulsion fuel is fed from the chamber to an internal combustion engine through a feeding pipe. Furthermore, the oil-water emulsion fuel which was not used in the internal combustion engine is returned to the chamber through a return pipe.

The mixer described in Patent Document 1 includes a partition plate, which divides the channel of fuel, water and air into two, in the channel. Also, more than one fungiform protrusion are equally spaced from one another along the channel. By dividing the channel into two, fuel, water and air rotationally flow through the channel. Furthermore, the fungiform protrusions make the flow of fuel, water and air turbulent. This allows fuel, water and air to be mixed at an appropriate level, thereby producing oil-water emulsion fuel.
Patent Document 1: Japanese Unexamined Patent Application Publication No. 59-77067

### DISCLOSURE OF THE INVENTION

### PROBLEMS TO BE SOLVED BY THE INVENTION

Unfortunately, the above-mentioned conventional device, which includes a partition plate dividing fluid into two in a channel and more than one fungiform protrusion equally spaced from one another along the channel, has complicated structure and is not easy to be manufactured.

The object of the present invention is to provide a mixer for a fuel feeding device, which has simple structure and easier to be manufactured.

### MEANS FOR SOLVING THE PROBLEMS

To solve the above problems, the mixer for a fuel feeding device according to the present invention is used with a fuel feeding device for feeding fuel to an internal combustion engine, and feeds mixed fuel, in which the fuel and other fluid are mixed together, to the fuel feeding device. The mixer for a fuel feeding device comprises:
a swirl flow chamber having a doughnut-shaped space area;
an inflow hole connected to the swirl flow chamber from an outer peripheral side of the swirl flow chamber;
a cylindrical section which is formed concentrically to the swirl flow chamber and which has a cylindrical space area;
a tapered hole formed concentrically to the swirl flow chamber,
diverged toward the swirl flow chamber, and connected to the swirl flow chamber and the cylindrical section; and
an outflow hole which is formed concentrically to the swirl flow chamber and which communicates with the cylindrical section on the opposite side thereof to the side where the cylindrical section is connected to the tapered hole.

The mixer for a fuel feeding device according to the present invention may further comprise:
a second inflow hole which is formed concentrically to the swirl flow chamber and which communicates with the tapered hole on the opposite side thereof to the side where the tapered hole is connected to the swirl flow chamber.

Also, in the mixer for a fuel feeding device according to the present invention,
at least one of the fuel and the mixed fuel is fed through the inflow hole, and at least one of water as the other fluid and the mixed fuel is fed through the second inflow hole.

The mixer for a fuel feeding device according to the present invention may further comprise:
an orifice which is connected to the second inflow hole and the tapered hole between the second inflow hole and the tapered hole; and
a third inflow hole which communicates with the orifice.
Accordingly, air as the other fluid may be fed through the third inflow hole.

The mixer for a fuel feeding device according to the present invention may further comprise:
a small-diameter hole which has a smaller inner diameter than the third inflow hole and which is connected to the third inflow hole and
the orifice between the third inflow hole and the orifice.

Also, in the mixer for a fuel feeding device according to the present invention,
an inner diameter of the outflow hole may be smaller than an inner diameter of the cylindrical section.

### ADVANTAGEOUS EFFECTS OF THE INVENTION

The mixer for a fuel feeding device according to the present invention atomizes other fluid such as water and air. Then, the mixer mixes the atomized fluid with fuel in the swirl flow chamber and the tapered hole. Furthermore, the mixer has simple structure and is easier to be manufactured.

### BRIEF DESCRIPTION OF THE DRAWINGS

Fig. 1 is a schematic block diagram of the fuel feeding device according to the first embodiment.
Fig. 2 is an enlarged cross-sectional view of the mixer which can be used with the fuel feeding device according to the first embodiment.
Fig. 3 is an enlarged cross-section view of another fuel feeding device which can be used with the first embodiment.
Fig. 4 is a schematic block diagram of the fuel feeding device according to the second embodiment.
Fig. 5 is an enlarged cross-sectional view of the mixer which can be used with the fuel feeding device according to the second embodiment.
Fig. 6 is a schematic block diagram of the fuel feeding device according to the third embodiment.
Fig. 7 is an enlarged cross-sectional view of the mixer which can be used with the fuel feeding device according to the third embodiment.

### EXPLANATION OF REFERENTIAL NUMERALS

1...internal combustion engine,
2...fuel injection valve,
4...feeding pipe,
6...mixing tank,
8...fuel,
10...water,
16...fuel pump,
26, 54, 105, 121...mixer,
29, 29a, 29b...inflow hole,
30, 123...mixer body,
32, 32a, 32b...swirl flow chamber,
33...wall,
34, 34a, 34b...cylindrical section,
37, 37a, 37b...second inflow hole,
42, 42a, 42b...tapered hole
44, 44a, 44b...orifice,
46, 46a, 46b...outflow hole,
49, 49a...third inflow hole,
52, 52a, 52b...small-diameter hole,
101...mixing tank,
102...fuel tank,
104...water tank

### BEST MODE FOR CARRYING OUT THE INVENTION

The embodiments of the present invention are described in detail below with reference to the attached drawings.

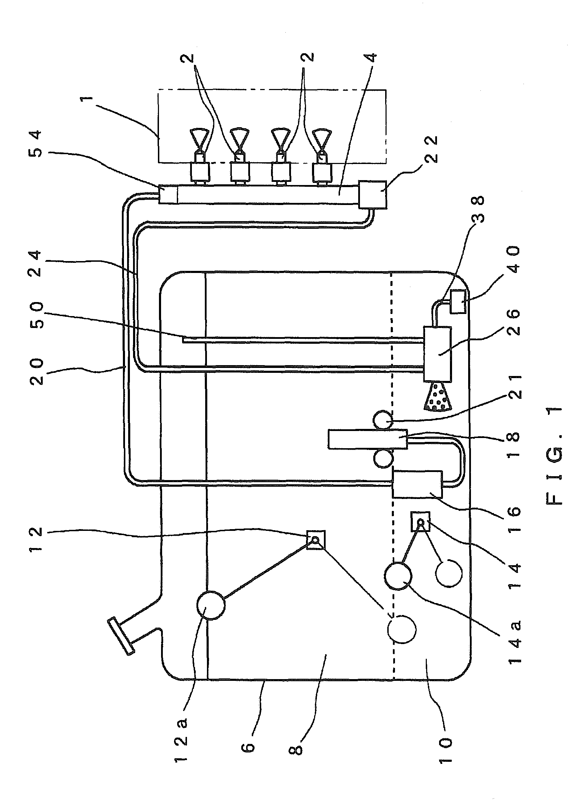

In Fig. 1, an internal combustion engine 1 is a four-cylinder gasoline engine. The present invention can be used with not only an internal combustion engine having four cylinders but also that having any number of cylinders. Furthermore, the present invention may be used with not only a gasoline engine but also a diesel engine.

Each cylinder of the internal combustion engine 1 includes a fuel injection valve 2, and fuel is injected from each fuel injection valve 2 to the corresponding cylinder. A feeding pipe 4 which channels fuel to each of the fuel injection valves 2 is connected to each of the fuel injection valves 2.

The feeding pipe 4 is connected to a mixing tank 6, in which fuel 8 and water 10 as other fluid are retained. Water 10 which has a higher specific gravity than fuel 8 is retained on the bottom side of the mixing tank 6, as shown by a broken line in Fig. 1. In the present embodiment, a fuel tank installed in a vehicle is used as a mixing tank 6.

The mixing tank 6 includes a fuel level sensor 12 which detects a retained volume of fuel 8 and a water level sensor 14 which detects a retained volume of water 10. The fuel level sensor 12 outputs a retained volume of fuel 8 in response to vertical motion of a float 12a which floats on the surface of fuel 8. The water level sensor 14 outputs a retained volume of water 10 in response to vertical motion of a float 14a which floats on the boundary (a broken line shown in Fig. 1) between fuel 8 and water 10.

A fuel pump 16 is disposed inside the mixing tank 6. The fuel pump 16 sucks fuel 8 and mixed fuel described below retained in the mixing tank 6 through a filter 18, and discharges the sucked fuel 8 or mixed fuel into a discharge pipe 20. The discharge pipe 20 is connected to the feeding pipe 4. The filter 18 is disposed with floats 21 which float on the boundary (a broken line shown in Fig. 1) between fuel 8 and water 10. The fuel pump 16 is capable of sucking fuel 8 or mixed fuel retained above the boundary regardless of vertical motion of the boundary between fuel 8 and water 10.

The feeding pipe 4 is disposed with a relief valve 22. The relief valve 22 is connected to a return pipe 24. The relief valve 22 relieves fuel 8 or mixed fuel into the return pipe 24 when the pressure inside the feeding pipe 4 exceeds a predetermined pressure.

The return pipe 24 is connected to a mixer for a fuel feeding device 26 (thereinafter referred to as the mixer 26) disposed inside the mixing tank 6. The mixer 26 is placed on the bottom side in the mixing tank 6. Specifically, the mixer 26 is preferably placed on the bottom side under the boundary between fuel 8 and water 10.

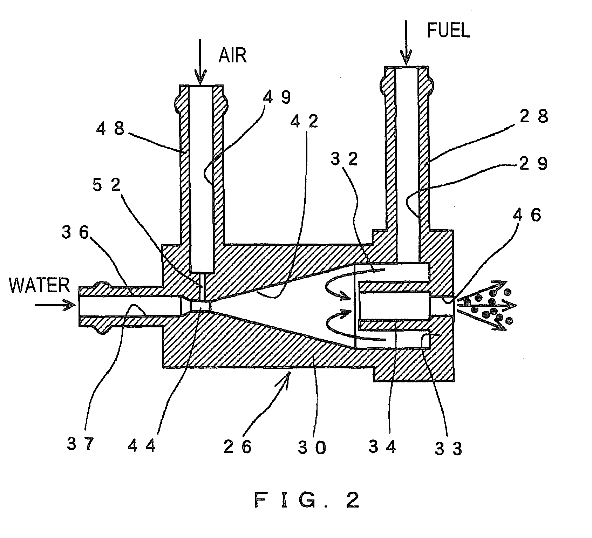

The mixer 26 includes, as shown in Fig. 2, a fuel junction 28 to which the return pipe 24 is connected. The fuel junction 28 includes an inflow hole 29 formed in an axial direction of the fuel junction 28. A mixer body 30 includes a swirl flow chamber 32 formed therein. The swirl flow chamber 32 is cylindrically formed.

The inflow hole 29 has an opening on the outer periphery of the swirl flow chamber 32, and communicates with the swirl flow chamber 32. In the present embodiment, the inflow hole 29 is formed in a radial direction of the cylindrical swirl flow chamber 32 (a vertical direction relative to the central axis of a cylindrical column). A swirl is formed inside the swirl flow chamber 32 by fuel 8 or mixed fuel flowing from the inflow hole 29 into the swirl flow chamber 32. Alternatively the inflow hole 29 may be formed such that fuel 8 or mixed fuel flows from the tangential direction of the swirl flow chamber 32 into the swirl flow chamber 32.

A tapered hole 42, which is formed concentrically to the swirl flow chamber 32, is connected to the swirl flow chamber 32. The expanded diameter side of the tapered hole 42 has a generally same diameter as that of the swirl flow chamber 32. The expanded diameter side of the tapered hole 42 is connected to the swirl flow chamber 32. The diameter of the tapered hole 42 reduces with distance from the swirl flow chamber 32.

One end side of the swirl flow chamber 32, that is, the opposite side to the side where the swirl flow chamber 32 is connected to the tapered hole 42, is blocked by a wall 33. A cylindrical section 34 is formed concentrically to the swirl flow chamber 32 so as to project from the wall 33 into the swirl flow chamber 32. The mixer body 30 includes an outflow hole 46 formed on the side of the wall 33. The outflow hole 46 communicates with the cylindrical section 34. The outflow hole 46 is formed concentrically to the swirl flow chamber 32 and the cylindrical section 34.

An orifice 44 is connected to the reduced diameter side of the tapered hole 42. Furthermore, a second inflow hole 37 formed in a water junction 36 is connected to the orifice 44. The tapered hole 42 and the orifice 44 are connected concentrically to each other. A water suction pipe 38 (see Fig. 1) is connected to the water junction 36. One end of the water suction pipe 38, that is, the opposite side to the side where the water suction pipe 38 is connected to the water junction 36, is connected to a filter 40 placed on the bottom side of the mixing tank 6.

An air suction pipe 50 (see Fig. 1) is connected to an air junction 48 formed in the mixer body 30. One end of the air suction pipe 50, that is, the opposite side to the side where the air suction pipe 50 is connected to the air junction 48, is located above the upper surface of fuel 8 retained in the mixing tank 6. A third inflow hole 49 is formed in an axial direction of the air junction 48. The third inflow hole 49 is connected to the orifice 44 through a small-diameter hole 52. The small-diameter hole 52 is, for example, a hole having a diameter of approximately 0.5 mm. By selecting an appropriate diameter of the small-diameter hole 52, the size of an air bubble described below can be adjusted. Also, by selecting an appropriate diameter, etc. of the second inflow hole 37, the volume of the water passing through the orifice 44 can be adjusted.

Next, operation of the mixer 26 according to the present embodiment will be explained.
At starting of the internal combustion engine 1, fuel 8 and water 10 are separated in the mixing tank 6. Fuel 8 and water 10 are preliminarily retained at a certain ratio in the mixing tank 6. Once the fuel pump 16 is driven, the fuel pump 16 sucks fuel 8 through the filter 18, and feeds fuel 8 into the feeding pipe 4 through the discharge pipe 20.

The fuel 8 delivered to the feeding pipe 4 is injected from each fuel injection valve 2 to the corresponding cylinder, and then burned. Accordingly, the internal combustion engine 1 starts. The fuel 8 which was not used in the feeding pipe 4 flows into the mixer 26 through the relief valve 22 and the return pipe 24. In the mixer 26, fuel 8 flows into the swirl flow chamber 32 through the return pipe 24 and the inflow hole 29. In the swirl flow chamber 32, a swirl flow of fuel 8 is generated around the outer periphery of the cylindrical section 34.

The fuel 8, which has become a swirl flow, flows into the tapered hole 42. At this time, water 10 retained in the mixing tank 6 flows into the tapered hole 42 through the filter 40, the water suction pipe 38, the second inflow hole 37, and the orifice 44 due to swirl flow effects.

The water 10 flowing into the tapered hole 42 is mixed with fuel 8 by the swirl flow of fuel 8 in the tapered hole 42. This allows fuel 8 and water 10 to be mixed, thereby producing emulsion fuel. Furthermore, when water 10 passes through the orifice 44, the flow of water 10 is reduced. At this time, air flows into the orifice 44 through the air suction pipe 50, the third inflow hole 49, and the small-diameter hole 52 due to orifice effects.

The air, by flowing through the small-diameter hole 52, becomes fine air bubbles. Then the air is mixed with fuel 8 and water 10 by the swirl flow in the tapered hole 42, thereby producing mixed fuel, that is, emulsion fuel mixed with the fine air bubbles. This mixed fuel is discharged from the outflow hole 46 into the mixing tank 6 through the tapered hole 42 to the cylindrical section 34.

The air, by flowing through the small-diameter hole 52 having a minimal diameter, becomes air bubbles having a minimal diameter. For example, in the present embodiment, micro-sized or nano-sized air bubbles are produced. The mixing ratio of fuel 8, water 10 and air may be appropriately determined. For example, water 10 may be approximately 5 to 55 % of fuel 8, and air may be approximately several % to dozens of % of fuel 8.

Thus, by driving the fuel pump 16, fuel 8 is delivered into the feeding pipe 4. Also, the mixer 26 produces mixed fuel in which fuel 8 is mixed with water 10 and air, and discharges the mixed fuel into the mixing tank 6. When the mixing tank 6 is filled with mixed fuel, the fuel pump 16 sucks the mixed fuel and feeds the mixed fuel into the feeding pipe 4 through the discharge pipe 20.

Then, the mixed fuel fed into the feeding pipe 4 is injected from each fuel injection valve 2 to the corresponding cylinder, and burned therein. Accordingly, the internal combustion engine 1 continues to operate. By injecting mixed fuel to the cylinder, not only the microparticulated air contained in the mixed fuel accelerates burning of fuel 8, but also water 10 causes micro-explosion, etc. At this time, particles of fuel 8 surrounding water 10 become finer, and whereby the area where fuel 8 and air contact each other increases significantly. Thus, burning of fuel 8 is further accelerated. While combustion efficiency is improved by improved fuel efficiency, emission is improved by reduced NOx caused by burning at lower temperatures.

The mixed fuel produced by the mixer 26 is fed into the feeding pipe 4 through the discharge pipe 20 by the fuel pump 16, and the mixed fuel which was not used in the feeding pipe 4 is fed into the mixer 26 again. It is desirable that 60 to 70 % of the mixed fuel fed to the feeding pipe 4 is set to return into the mixer 26.

Microparticulated water and air bubbles are separated from fuel in several minutes to dozens of minutes. Mixed fuel returned into the mixer 26 flows into the swirl flow chamber 32 through the inflow hole 29. Then, in the swirl flow chamber 32, a swirl flow of mixed fuel is generated around the outer periphery of the cylindrical section 34. The swirl flow of mixed fuel flows from the swirl flow chamber 32 into the tapered hole 42, which causes the mixed fuel to be stirred. Then, mixed fuel or fuel 8 is mixed with water 10 and air, and separation of water 10 is inhibited. Furthermore, by stirring, microparticulated air bubbles and emulsion fuel are mixed again.

Mixed fuel (containing fuel 8, water 10 and air) flows into the tapered hole 42 through the filter 40, the water suction pipe 38, the water junction 36, and the orifice 44. When mixed fuel passes through the orifice 44, the flow of mixed fuel is reduced. At this time, due to orifice effects, air flows into the orifice 44 through the small-diameter hole 52. The air becomes fine air bubbles through the small-diameter hole 52, and the air bubbles are mixed with mixed fuel by the swirl flow thereof.

While water 10 is left in the bottom of the mixing tank 6, the left water 10 flows into the tapered hole 42 through the filter 40, the water suction pipe 38, the water junction 36 and the orifice 44. When water 10 separated from mixed fuel accumulates in the bottom of the mixing tank 6, the separated water 10 flows into the tapered hole 42 through the filter 40, the water suction pipe 38, the water junction 36 and the orifice 44.

Even if a part of the air bubbles is separated from the mixed fuel retained in the mixing tank 6, air bubbles are supplied in the mixed fuel again by the mixer 26. Specifically, due to continued operation of the internal combustion engine 1 (continued operation of the mixer 26), the air bubbles separated from mixed fuel are balanced with those supplied in the mixed fuel. Accordingly, a steady state in which a certain ratio of air bubbles is mixed in mixed fuel is realized.

In the present embodiment, circulation is realized in which mixing (production of mixed fuel) is performed in the mixer 26 and the mixed fuel is discharged into the mixing tank 6. Even if air bubbles are separated from mixed fuel (emulsion fuel) while the mixed fuel is returned to the mixer 26, microparticulated air bubbles are mixed in mixed fuel (emulsion fuel) again by the mixer 26, and the mixed fuel (the emulsion fuel) with the microparticulated air bubbles is discharged from the outflow hole 46 into the mixing tank 6. Accordingly, mixed fuel in which fuel 8 is mixed with water 10 and air is constantly retained in the mixing tank 6.

Thus, in the present embodiment, mixed fuel returned from the feeding pipe 4 is stirred in the mixer 26, and the mixed fuel is mixed with air again to be discharged into the mixing tank 6. That is, even if water 10 and air are separated from mixed fuel returned from the feeding pipe 4, by stirring the mixed fuel to be mixed with water 10 and air again, mixed fuel mixed with fuel 8, water 10 and air can be continuously fed to the internal combustion engine 1 in the simple structure.

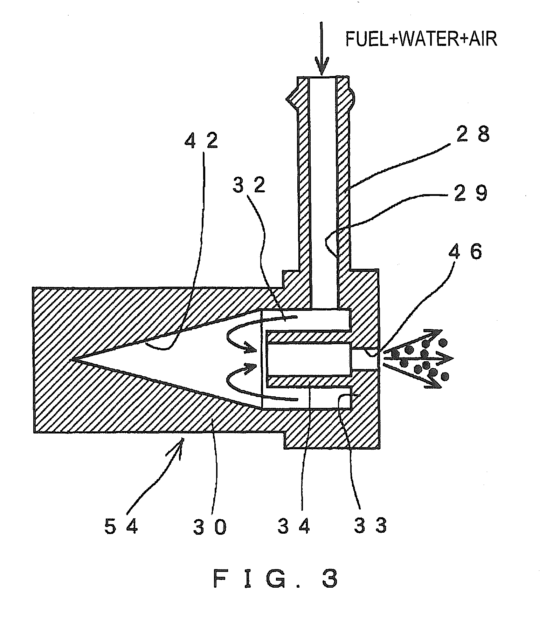

Furthermore, in the present embodiment, a mixer 54 (see Fig. 1) is disposed between the discharge pipe 20 and the feeding pipe 4 in order to promote mixing. The mixer 54 may be provided as necessary. Fig. 3 shows the structure of the mixer 54. The corresponding components to those of the mixer 26 are denoted by the same numerals in Fig. 3.

The mixer 54 is different from the above-mentioned mixer 26 in that the mixer 54 does not include the water junction 36, the second inflow hole 37, the orifice 44, the air junction 48, the third inflow hole 49, and the small-diameter hole 52. In the mixer 54, mixed fuel (mixed fuel containing fuel 8, water 10 and air) delivered from the fuel pump 16 is fed into the inflow hole 29.

Mixed fuel flows in the swirl flow chamber 32 through the inflow hole 29. In the swirl flow chamber 32, a swirl flow of mixed fuel is generated around the outer periphery of the cylindrical section 34. The mixed fuel which has become a swirl flow flows in the tapered hole 42 from the swirl flow chamber 32. The mixed fuel is stirred by the swirl flow thereof. That is, fuel 8, water 10 and air are stirred and mixed to be microparticulated again. The stirred mixed fuel is discharged from the outflow hole 46 into the feeding pipe 4.

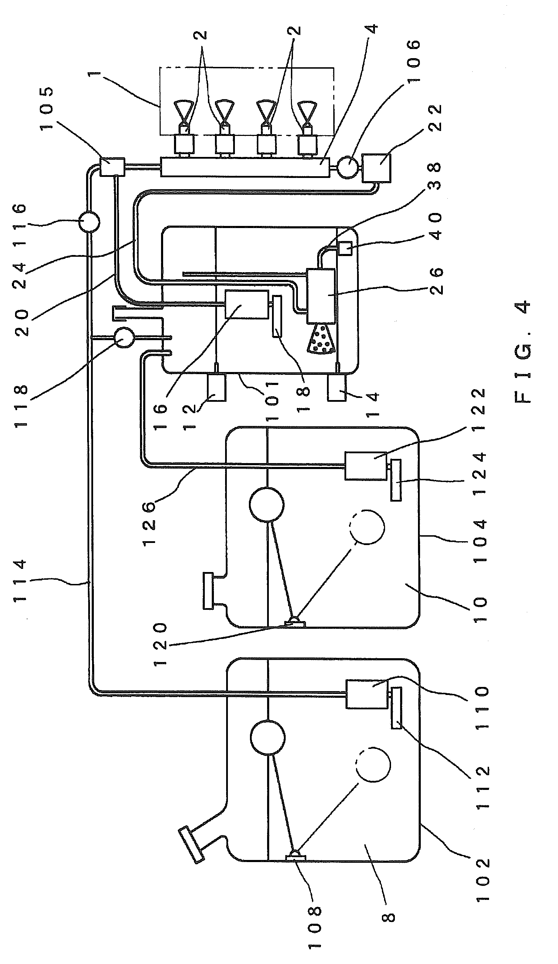

Next, the second embodiment of the present invention will be described with reference to Fig. 4. The corresponding components to those of the above-mentioned embodiment are denoted by the same numerals.
In the second embodiment, instead of the mixing tank 6 mentioned above, a mixing tank 101 which produces mixed fuel, a fuel tank 102 which retains fuel, and a water tank 104 which retains water are separately provided.

In the mixing tank 101, similarly to the above-mentioned mixing tank 6, a fuel level sensor 12, a water level sensor 14, a fuel pump 16, a filter 18, a mixer 26, and a filter 40 are provided. A discharge pipe 20 connected to the fuel pump 16 is connected to a feeding pipe 4 through a mixer 105. The feeding pipe 4 is connected to the mixer 26 through an on-off valve 106, a relief valve 22, and a return pipe 24.

In the fuel tank 102, a fuel level sensor 108 which detects a retained volume of fuel 8, and a fuel feeding pump 110 are provided. The fuel feeding pump 110 sucks fuel 8 in the fuel tank 102 through a filter 112, and discharges the fuel 8 into a supply pipe 114. The supply pipe 114 is connected to the mixer 105 through an on-off valve 116 as well as to the mixing tank 101 through an on-off valve 118.

In the water tank 104, a water level sensor 120 which detects a retained volume of water 10, and a water feeding pump 122 are provided. The water feeding pump 122 sucks water 10 retained in the water tank 104 through a filter 124, and supplies the water 10 into the mixing tank 101 through a supply pipe 126.

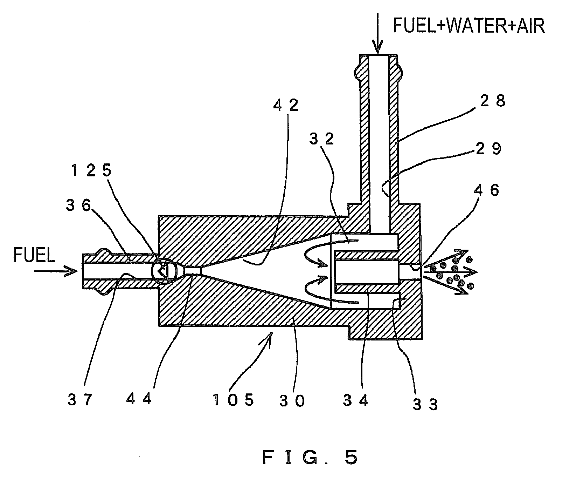

At starting of an internal combustion engine 1, the fuel feeding pump 110 is driven, the on-off valves 116 and 106 are opened and the on-off valve 118 is closed. By driving the fuel feeding pump 110, fuel 8 is fed from the fuel tank 102 into the feeding pipe 4 through the supply pipe 114, the on-off valve 116, and the mixer 105, and then injected from each fuel injection valve 2 to the corresponding cylinder. In the mixer 105 (see Fig. 5), fuel 8 passes through the second inflow hole 37 and the tapered hole 42 to be discharged from the outflow hole 46 into the feeding pipe 4.

The fuel 8 which was not used in the feeding pipe 4 is fed into the mixer 26 through the on-off valve 106, the relief valve 22, and the return pipe 24. In the mixer 26, the fuel 8, and the mixed fuel returned from the feeding pipe 4, are mixed with water 10 and air. The mixed fuel produced as such is discharged into the mixing tank 101, and retained in the mixing tank 101.

After starting of the internal combustion engine 1, the on-off valve 116 is closed, the on-off valve 118 is closed, and the fuel pump 16 is driven. Then the mixed fuel retained in the mixing tank 101 is fed into the feeding pipe 4 through the mixer 105. The mixed fuel is injected from each fuel injection valve 2 to the corresponding cylinder.

As shown in Fig. 5, the mixer 105 is different from the above-mentioned mixer 26 (see Fig. 2) in that the mixer 105 does not include the air junction 48, the third inflow hole 49, and the small-diameter hole 52. In the mixer 105, mixed fuel (mixed fuel containing fuel 8, water 10, and air) from the fuel pump 16 is fed into the inflow hole 29. A variable throttle valve 125 is disposed to the second inflow hole 37 of the mixer 105.

In the mixer 105, the mixed fuel fed through the inflow hole 29 flows into the swirl flow chamber 32. In the swirl flow chamber 32, a swirl flow of mixed fuel is generated around the outer periphery of the cylindrical section 34. The mixed fuel which has become a swirl flow in the swirl flow chamber 32 flows into the tapered hole 42. The mixed fuel is stirred by the swirl flow thereof. That is, fuel 8, water 10, and air are stirred and mixed together to be microparticulated again. The stirred mixed fuel is discharged from the outflow hole 46 into the feeding pipe 4.

In the second embodiment, the circulation of mixed fuel is realized by the mixing tank 101, the fuel pump 16, the discharge pipe 20, the mixer 105, the feeding pipe 4, the on-off valve 106, the relief valve 22, the return pipe 24, and the mixer 26. Even if water 10 and air are separated from mixed fuel during the circulation thereof, mixing of fuel 8, water 10, and air are performed again by the mixer 26 and the mixer 105.

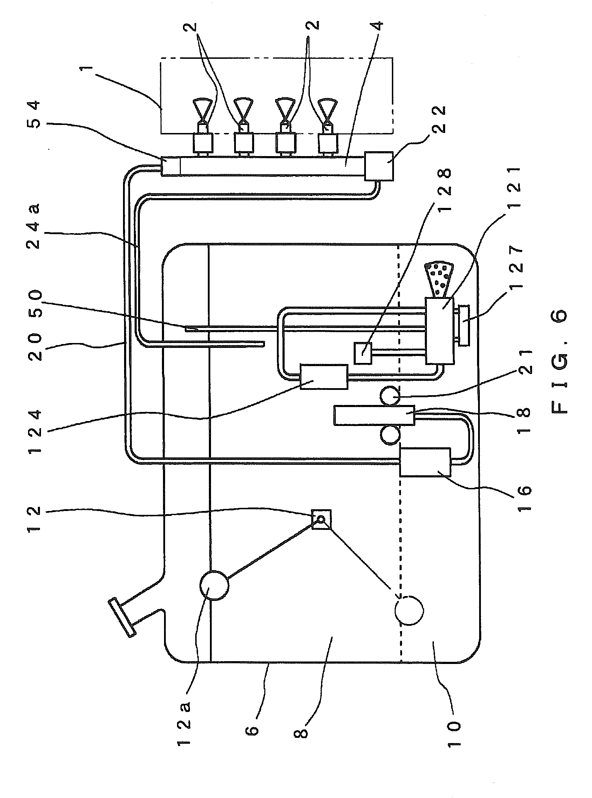

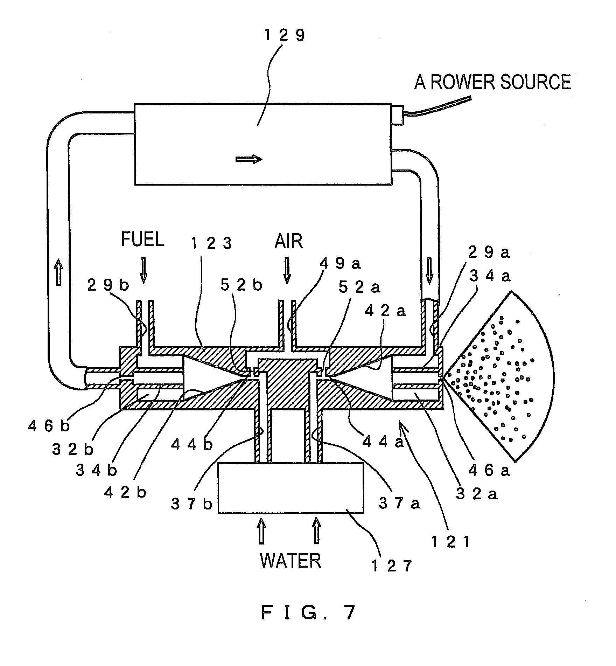

Next, the third embodiment of the present invention will be described with reference to Fig. 6 and Fig. 7.
In the third embodiment, the fuel 8 which was not used in the feeding pipe 4 is directly returned from a return pipe 24a into a mixing tank 6 through the relief valve 22. As shown in Fig. 7, in a mixer 121, a pair of the above-mentioned mixers 26 is symmetrically disposed in a mixer body 123.

In the mixer 121, an inflow hole 29a is connected to an outlet of a second fuel pump 129. The mixer 121 further includes a second inflow hole 37a for sucking water 10 retained in the mixing tank 6 (see Fig. 6) through a filter 127. The air suction pipe 50 (see Fig. 6) is connected to a third inflow hole 49a. Air flows into the third inflow hole 49a through the air suction pipe 50, and further flows from a small-diameter hole 52a on one side to an orifice 44a. An outflow hole 46a opens for being capable of discharging mixed fuel into the mixing tank 6.

An inflow hole 29b communicates with the inside of the mixing tank 6 through a filter 128 (see Fig. 6). A second inflow hole 37b is provided to be capable of sucking water 10 retained in the mixing tank 26 through the filter 127. Since the third inflow hole 49a is also connected to a small-diameter hole 52b, the air passing through the air suction pipe 50 and the third inflow hole 49a also flows from the small-diameter hole 52b into an orifice 44b. An outflow hole 46b is connected to an inlet of the second fuel pump 129.

The second fuel pump 129, when driven, sucks fuel (fuel 8 or mixed fuel) retained in the mixing tank 6 through the inflow hole 29b, a swirl flow chamber 32b, a tapered hole 42b, a cylindrical section 34b, and the outflow hole 46b.

At that time, fuel 8 or mixed fuel flows from the inflow hole 29b into the swirl flow chamber 32b. Then, a swirl flow of fuel 8 or mixed fuel is generated around the outer periphery of the cylindrical section 34b in the swirl flow chamber 32b. The fuel 8 or the mixed fuel, which has become a swirl flow, flows into the tapered hole 42b. At this time, due to swirl flow effects, water 10, as other fluid in the mixing tank 6, flows into the tapered hole 42b through the filter 127, the second inflow hole 37b, and the orifice 44b. When water 10 passes through the orifice 44b, the flow of water 10 is reduced. At this time, due to orifice effects, air, as other fluid, flows into the orifice 44b through the third inflow hole 49a and the small-diameter hole 52b.

The water 10 which entered into the tapered hole 42b is mixed with the swirl flow of fuel 8 or mixed fuel in the tapered hole 42b. That is, fuel 8 or mixed fuel is mixed with water 10 to produce emulsion fuel. When the mixing tank 6 is filled with mixed fuel, the mixed fuel, instead of water 10, flows in the tapered hole 42b through the filter 127, the second inflow hole 37b, and the orifice 44b.

Also, the air entering in the third inflow hole 49a due to the above-mentioned orifice effects becomes fine air bubbles when passing through the small-diameter hole 52b, and flows in the tapered hole 42b. Then the air is mixed with fuel 8 or mixed fuel in the tapered hole 42b. Accordingly, mixed fuel, that is, emulsion fuel mixed with fine air bubbles, is produced. This mixed fuel is sucked out of the outflow hole 46b into the second fuel pump 129.

In the second fuel pump 129, the sucked mixed fuel is pressurized and then discharged into the inflow hole 29a. The discharged mixed fuel flows from the inflow hole 29a into a swirl flow chamber 32a. In the swirl flow chamber 32a, a swirl flow of mixed fuel is generated around the outer periphery of a cylindrical section 34a. The mixed fuel, which has become the swirl flow, flows in a tapered hole 42b. At this time, due to swirl flow effects, water 10, as other fluid in the mixing tank 6, flows into the tapered hole 42a through the filter 127, the second inflow hole 37a, and the orifice 44a. When the water 10 passes through the orifice 44a, the flow of the water 10 is reduced. At this time, due to orifice effects, air, as other fluid, flows into the orifice 44a through the third inflow hole 49a and the small-diameter hole 52a.

The water 10 which entered in the tapered hole 42a is mixed with the swirl flow of mixed fuel in the tapered hole 42a. That is, mixed fuel and water 10 are mixed together to produce emulsion fuel. When the mixing tank 6 is filled with mixed fuel, the mixed fuel, instead of water 10, flows into the tapered hole 42a through the filter 127, the second inflow hole 37a, and the orifice 44a.

Also, the air entering in the third inflow hole 49a due to orifice effects as described above becomes fine air bubbles when passing through the small-diameter hole 52a, and flows in the tapered hole 42a. Then the air is mixed with mixed fuel in the tapered hole 42a. Accordingly, mixed fuel mixed with fine air bubbles is produced. This mixed fuel is discharged out of the outflow hole 46a into the mixing tank 6. The mixed fuel in the mixing tank 6 is fed into the feeding pipe 4 by the fuel pump 16. The mixed fuel which was not used in the feeding pipe 4 is returned into the mixing tank 6 through the return pipe 24a.

The present invention shall not be limited to the embodiments described above, and can be implemented in various aspects in a range without departing from the gist of the present invention.

## Claims

1. A mixer for a fuel feeding device, which is used with a fuel feeding device for feeding fuel to an internal combustion engine, and which feeds mixed fuel, in which the fuel and other fluid are mixed together, to the fuel feeding device, the mixer for a fuel feeding device comprising:
a swirl flow chamber having a doughnut-shaped space area;
an inflow hole connected to the swirl flow chamber from an outer peripheral side of the swirl flow chamber;
a cylindrical section which is formed concentrically to the swirl flow chamber and which has a cylindrical space area;
a tapered hole formed concentrically to the swirl flow chamber, diverged toward the swirl flow chamber, and connected to the swirl flow chamber and the cylindrical section; and
an outflow hole which is formed concentrically to the swirl flow chamber and which communicates with the cylindrical section on the opposite side thereof to the side where the cylindrical section is connected to the tapered hole.

2. The mixer for a fuel feeding device according to claim 1, comprising a second inflow hole which is formed concentrically to the swirl flow chamber and which communicates with the tapered hole on the opposite side thereof to the side where the tapered hole is connected to the swirl flow chamber.

3. The mixer for a fuel feeding device according to claim 2, wherein at least one of the fuel and the mixed fuel is fed through the inflow hole, and at least one of water as the other fluid and the mixed fuel is fed through the second inflow hole.

4. The mixer for a fuel feeding device according to claim 2 or 3, comprising:
an orifice which is connected to the second inflow hole and the tapered hole between the second inflow hole and the tapered hole; and
a third inflow hole which communicates with the orifice,
wherein air as the other fluid is fed through the third inflow hole.

5. The mixer for a fuel feeding device according to claim 4, comprising a small-diameter hole which has a smaller inner diameter than the third inflow hole and which is connected to the third inflow hole and the orifice between the third inflow hole and the orifice.

6. The mixer for a fuel feeding device according to any one of claims 1 to 5, wherein an inner diameter of the outflow hole is smaller than an inner diameter of the cylindrical section.
